**Europäisches Patentamt**

**European Patent Office**

**Office européen des brevets**

(19)

(11) Veröffentlichungsnummer : **0 042 120
B1**

(12) **EUROPÄISCHE PATENTSCHRIFT**

(45) Veröffentlichungstag der Patentschrift :
22.06.83

(21) Anmeldenummer : 81104349.6

(22) Anmeldetag : 05.06.81

(51) Int. Cl.³ : **B 23 B 51/00**

(54) **Zerspanungswerkzeug mit Wendeplatte.**

(30) Priorität : 12.06.80 DE 3022104

(43) Veröffentlichungstag der Anmeldung :
23.12.81 Patentblatt 81/51

(45) Bekanntmachung des Hinweises auf die Patenterteilung : 22.06.83 Patentblatt 83/25

(84) Benannte Vertragsstaaten :
DE FR GB IT SE

(56) Entgegenhaltungen :
FR A 2 312 323
US A 2 621 548
US A 3 163 246
US A 3 859 700

(73) Patentinhaber : **MAPAL Fabrik für Präzisionswerkzeuge Dr. Kress KG
Obere Bahnstrasse 13
D-7080 Aalen (DE)**

(72) Erfinder : **Kress, Dieter, Dr. Dipl.-Ing.
Walkstrasse 87
D-7080 Aalen (DE)**
Erfinder : **Häberle, Friedrich
Fliederstrasse 14
D-7081 Lauchheim (DE)**

(74) Vertreter : **Patentanwälte Dr. Ing. Eugen Maier Dr. Ing.
Eckhard Wolf
Pischekstrasse 19
D-7000 Stuttgart 1 (DE)**

Beschreibung

Die Erfindung betrift ein Zerspanungswerkzeug nach dem Gattungsbegriff des Anspruches 1, wie es z. B. den Gegenstand der DE-AS 25 39 855 bildet.

Bei solchen Zerspanungswerkzeugen können die den nicht im Eingriff befindlichen Schneiden als Abstützung dienenden Widerlagerflächen eine Zentrierung der Wendeplatte dann nicht zuverlässig gewährleisten, wenn der von den Widerlagerflächen gebildete Winkel nicht exakt mit dem von den Freiflächen der Schneiden der Wendeplatte gebildeten Winkel übereinstimmt oder bewußt kleiner als der von den Freiflächen gebildete Winkel gewählt wird. Eine exakte Zentrierung der Wendeplatte bereitet insbesondere dann Schwierigkeiten, wenn die Wendeplatte vier Kreisbogenabschnitte von etwa 90° aufweist und die Widerlagerflächen entsprechend gekrümmt ausgebildet sind. Die Gefahr einer Verdrehung der Wendeplatte um die Achse des die Klemmbacken gegen die Wendeplatte pressenden Spannbolzens besteht insbesondere dann, wenn die Wendeplatte als kreisrunde Platte ausgebildet ist.

Der Erfindung liegt die Aufgabe zugrunde, eine exakte Zentrierung der Wendeplatte bei Zerspanungswerkzeugen der vorgenannten Art nicht nur auf kraftschlüssige Weise, sondern insbesondere auf formschlüssige Weise zu erzielen, was dadurch erreicht wird, daß der Messerkopf die im Kennzeichen des Anspruchs 1 aufgeführten Merkmale aufweist.

Damit mit einem solchen Werkzeug auch ins Volle gearbeitet werden kann, muß eine der beiden wirksamen Schneiden sich genau bis zur Achse des Messerkopfes erstrecken, so daß die zur Aufnahme der Fixiernase bestimmte, am Umfang der Messerplatte vorgesehene schmale Quernut außermittig angeordnet werden muß. Die vier Schneidkanten erstrecken sich somit über einen Winkel, der um die Winkelbreite der Quernut kleiner als 90° ist, wobei die Nase des T-Stücks so außermittig angeordnet ist, daß die eine der beiden Schneidkanten sich genau bis zur Mittelachse erstreckt.

Um die beiden, die Widerlagerflächen bildenden Schenkel des T-Stücks mit ausreichendem Druck gegen die beiden Freiflächen der nicht im Eingriff stehenden Schneiden pressen zu können, ist in einer Bohrung des Messerkopfschaftes ein gegen die rückwärtige Stirnfläche des Zapfens des T-Stücks anliegender Rundkeil angeordnet, der mittels einer Stellschraube verstellt werden kann.

In der Zeichnung ist ein Ausführungsbeispiel des erfindungsgemäßen Zerspanungswerkzeugs in schematischer Weise dargestellt. Es zeigen

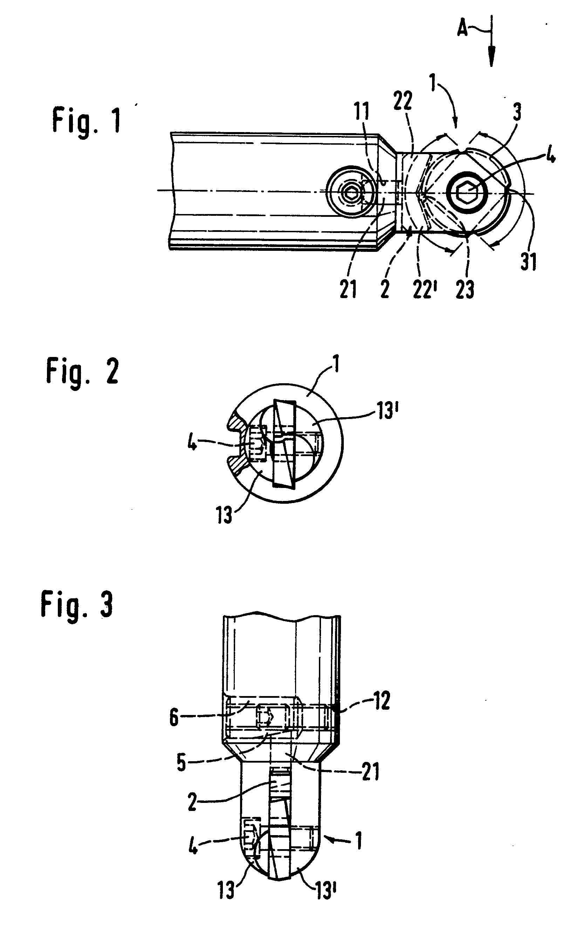

Figur 1 eine Seitenansicht des Messerkopfes ;

Figur 2 eine Stirnseitenansicht des Messerkopfes ;

Figur 3 eine Seitenansicht des Messerkopfes in Richtung des Pfeils A der Fig. 1 gesehen.

Der Messerkopf 1 weist eine stirnseitige Axialbohrung 11 und eine in diese mündende Radialbohrung 12 sowie zwei Klemmbacken 13 und 13' auf. Zwischen diesen Klemmbacken ist das T-Stück 2, dessen Schenkel 22 und 22' der Wendeplatte 3 als Widerlager dienen, eingesetzt, wobei der zylindrische Zapfen 21 des T-Stücks in die Axialbohrung 11 eingreift. Am T-Stück 2 ist eine Nase 23 so angeordnet, daß die innere Flanke dieser Nase in der zu den Klemmbacken 13 und 13' senkrechten Achsenebene liegt. Diese Nase greift in eine der vier am Wendeplattenumfang vorgesehenen Quernuten 31 ein und fixiert somit die Wendeplatte gegen ein Verschwenken um die Achse der sie durchsetzenden Spannschraube 4, die die Wendeplatte zwischen den beiden Klemmbacken einspannt. Um einen ausreichenden Druck der durch die Schenkel 22 und 22' des T-Stücks gebildeten Widerlagerflächen auf die Wendeplatte auszuüben, ist in einer Radialbohrung des Messerkopfschaftes ein Rundkeil 5 angeordnet, der gegen die Rückwärtige Stirnfläche des zylindrischen Zapfens 21 anliegt.

## Ansprüche

1. Zerspanungswerkzeug mit einer in einen stirnseitigen Schlitz des Messerkopfes (1) eingesetzten Wendeplatte (3), die eine Aussparung zur Aufnahme eines Spannbolzens (4) aufweist, der mit seinem Kopf gegen die Ringschulter einer Bohrung des einen (1C) der beiden den Schlitz bildenden Backen (13, 13') anliegt und mit seinem ein Gewinde aufweisenden Ende in den anderen Backen (13') eingeschraubt ist, und die zu ihrer Fixierung schaftseitig gegen zwei axialsymmetrisch ausgebildete schräge Widerlagerflächen eines in den Schlitz eingesetzten Einsatzes (2) anliegt, dadurch gekennzeichnet, daß die Widerlagerflächen durch die Schenkel (22, 22') eines T-Stücks (2) gebildet werden, das eine in eine am Umfang der Wendeplatte (3) vorgesehene Quernut (31) eingreifende Nase (23) und einen in eine Axialbohrung (11) des Messerkopfschaftes eingreifenden Zapfen (21) aufweist.

2. Zerspanungswerkzeug nach Anspruch 1, dadurch gekennzeichnet, daß die Nase (23) und die sie aufnehmende Nut (31) außerhalb der Messerkopfachse angeordnet ist.

3. Zerspanungswerkzeug nach Anspruch 1 oder 2, dadurch gekennzeichnet, daß in einer in die Axialbohrung (11) des Messerkopfes (1) mündenden Radialbohrung (12) ein mittels einer Schraube (6) verstellbarer Rundkeil (5) angeordnet ist.

4. Zerspanungswerkzeug nach einem der Ansprüche 1 bis 3, gekennzeichnet durch eine Wendeplatte (3) mit einer mittelachsigen Aussparung zur Aufnahme eines Spannbolzens, mit vier zu ihrer Mittelachse symmetrisch angeordneten kreisbogenförmig gekrümmten Schneiden und mindestens zwei zwischen zwei Schneidkanten angeordneten, diagonal einander gegenüberliegenden Nuten (31).

## Claims

1. A machining tool with a reversible plate (3), which is inserted in a slot at the front end of the cutter head (1) and has an opening for receiving a clamping bolt (4) which bears by its head against the annular shoulder of a bore formed in one (13) of the two jaws (13, 13') forming the slot and is screwed at its threaded end into the other jaw (13'), the reversible plate being fixed by bearing at the shank end against two axially-symmetrically formed inclined backing faces of an insert (2) fitted in the slot, characterized in that the backing faces are formed by the limbs (22, 22') of a T-piece (2), which has a nose (23), engaging in a transverse channel (31) formed in the periphery of the reversible plate (3), and a peg (21) engaging in an axial bore (11) formed in the stem of the cutter head.

2. A machining tool according to Claim 1, characterized in that the nose (23) and the channel (31) which accommodates it are arranged outside the axis of the cutter head.

3. A machining tool according to Claim 1 or Claim 2, characterized in that a round wedge (5), displaceable by means of a screw (6), is arranged in a radial bore (12) which communicates with the axial bore (11) of the cutter head (1).

4. A machining tool according to any one of Claims 1 to 3, characterized by a reversible plate (3) with an opening at its central axis for receiving a clamping bolt, with four arcuate cutting edges arranged symmetrically in relation to its central axis, and with at least two diagonally opposite channels (31) arranged between two cutting edges.

## Revendications

1. Outil à enlever des copeaux comprenant une plaquette retournable (2) disposée dans une fente frontale de la tête porte-lames (1) et présentant un évidement destiné à recevoir une broche filetée de serrage dont la tête s'applique contre l'épaulement annulaire d'un alésage pratiqué dans une (13) des deux mâchoires (13, 13') formant la fente et dont l'autre extrémité, filetée, est vissée dans l'autre mâchoire (13'), ladite plaquette retournable s'appuyant pour sa fixation du côté de la tige de l'outil contre deux surfaces obliques de butée, disposées symétriquement par rapport à l'axe, qui appartiennent à une pièce (2) insérée dans la fente, caractérisé en ce que les surfaces de butée sont constituées par les branches (22, 22') d'une pièce en « T », (2), qui présente un nez (23) s'engageant dans une rainure transversale (31) prévue sur le pourtour de la plaquette retournable et une tige (21) qui s'engage dans un alésage axial (31) de la tige de la tête porte-lames.

2. Outil à enlever des copeaux selon la revendication 1, caractérisé en ce que le nez (23) et la rainure (31) qui le reçoit sont disposés hors de l'axe de la tête porte-lames.

3. Outil à enlever des copeaux selon la revendication 1 ou 2, caractérisé en ce qu'une clavette ronde en forme de coin (5), que l'on peut déplacer à l'aide d'une vis (6), est disposée dans un alésage (12) qui débouche dans l'alésage axial (11) de la tête porte-lames (1).

4. Outil à enlever des copeaux selon une des revendications 1 à 3, caractérisé par une plaquette retournable (3) présentant un évidement central destiné à recevoir une broche de serrage et comportant quatre tranchants à courbure circulaire, symétriquement disposés par rapport à son axe médian, et au moins deux rainures opposées, (31), disposées entre deux arêtes tranchantes.

Fig. 1

Fig. 2

Fig. 3